# EUROPEAN PATENT SPECIFICATION

(11) **EP 2 568 619 B1**
(45) Date of publication and mention of the grant of the patent: **05.03.2014**
(21) Application number: 11180819.2
(22) Date of filing: 09.09.2011
(51) Int. Cl.: H04B 3/23, H04M 9/08

(54) **Echo cancelling-codec**
Abbruchscodec bei Echo
Codec d'annulation d'écho

(43) Date of publication of application: 13.03.2013
(73) Proprietor: QNX Software Systems Limited, Ottawa, Ontario K2M 1W8 (CA)
(72) Inventor: Mason, Steven, Vancouver, British Columbia V6B 2K4 (CA); Hetherington, Phillip Alan, Vancouver, British Columbia V6B 2K4 (CA); Paranjpe, Shree, Vancouver, British Columbia V6B 2K4 (CA)
(74) Representative: Patel, Binesh

(56) References cited:
- US-A1- 2008 112 568
- US-A1- 2009 088 223

## Description

### TECHNICAL FIELD

The present disclosure relates to acoustic echo cancellation and in particular relates to an integrated acoustic echo cancellation and with audio coding and decoding (codec).

### BACKGROUND

Acoustic echo cancellation is required when sound generated by a speaker and received by a microphone of the same device results in an echo being transmitted through a communication path back to the origin of the sound. The impact of acoustic echo can be significant where the microphone can receive undesired audio from the speaker of a terminal device due to proximity of the speaker and microphone, the sensitivity of the microphone or volume of the speaker. This is can occur in terminal devices, such as for example speakerphones, hands-free phone systems such as in an automobile, installed room systems which use ceiling speakers and microphones on the table, or dedicated standalone conference phones. However, acoustic echo can also be an issue in a standard telephone or mobile devices depending on the design and placement of the microphone and speaker components.

In most of these cases, direct and indirect sound from the speaker enters the microphone and returns back to the far end or talker. The difficulties in cancelling acoustic echo can be increased by the alteration of the original sound by the ambient space around the speaker, for example a conference room or an interior of a car. The acoustic echo needs to be cancelled, or it will be sent back to the far end or talker, which due to the round-trip transmission delay can be very distracting.

When the audio uses digital transmission through a communications network the terminal devices can encode and decode audio using a codec such as for example G.722, G.723, G.726, G.728, G.729 codecs to reduce bandwidth requirements. The echo cancellation is implemented separately from the codec functions and is generally based on G.168, G.131, and G.169 [ITU-T-G.168 (2004), ITU-T-G.131 (2003), ITU-T-G.169 (1999)] recommendations. In terminal devices, the acoustic echo cancelation and codecs have traditionally been implemented in separate components to meet varying system requirements. As such, they are restricted to communicate with each other via (human-acceptable) audio waveforms in the amplitude signal domain. Accordingly, improved systems and methods of echo-cancellation in terminal devices remain highly desirable.

US Patent Publication No: US 2009/0088223 discloses duplex audio communications over a network use compressed audio data, with linear prediction coefficients (LPCs) and variances by which sample values differ from predictions. An adaptive echo canceller for a transceiver develops finite impulse response filter (FIR) coefficient characterizing an echo path between its local audio output and audio input. The received/decompressed audio data is applied to the FIR coefficients, and the predicted echo is subtracted from the uplink signal. Echo is detected as cross-correlation of the receive signal versus the uplink/send signal over time. The cross-correlation is determined using a pre-whitened receive signal, obtained by adopting the variance values received over the network by the downlink Codec. Apart from the uplink Codec, no speech analysis filter or process is needed. The technique is apt for GSM, AMR and similar compressed audio communications.

US Patent Publication No: US 2008/0112568 discloses an echo canceller for use in a sound reinforcement communication system configured to carry out a sound reinforcement communication by utilizing a speaker and a microphone, the echo canceller including: an adaptive filter section configured to adaptively identify an impulse response of a feedback path formed by an acoustic coupling or the like between the speaker and the microphone to estimate an echo component in the feedback path from an input signal to the feedback path and subtracting the echo component thus estimated from an output signal from the feedback path; and an echo suppressing section configured to execute echo suppressing processing for an output signal from the adaptive filter section.

### SUMMARY

In accordance with an aspect of the present disclosure there is provided an echo-cancelling codec comprising an audio decoder coupled to a data interface for decoding an encoded audio domain receive-input {RI} signal to an amplitude domain receive-output {RO} signal provided to a speaker output; an acoustic echo-canceller for: receiving a frequency processing domain {RO} signal transformed from the amplitude domain {RO} signal; receiving a frequency processing domain send-input {SI} signal transformed from a microphone input amplitude domain send-input {SI} signal coupled to the echo-cancelling codec; removing the frequency processing domain {RO} signal from the frequency processing domain {SI} signal to generate a frequency processing domain send-output {SO} signal; and an audio encoder coupled to the acoustic echo-canceller for encoding the frequency processing domain {SO} signal from the acoustic echo-canceller to an encoded audio domain {SO} signal and providing the encoded audio domain {SO} signal to the data interface.

In accordance with another aspect of the present disclosure there is provided a method of audio signal processing performed by a processor. The method comprising decoding an encoded audio domain receive-input {RI} signal received at a data interface of the processor to an amplitude domain receive-output {RO} signal and transforming to a frequency processing domain {RO} signal; providing an amplitude domain receive-output {RO}signal to a speaker output coupled to the processor from the decoded audio domain {RI} signal; receiving an amplitude domain send-input {SI} signal from a microphone input coupled to the processor and transforming the amplitude domain {SI} signal to a frequency processing domain {SI} signal; performing acoustic echo cancellation by removing the frequency processing domain {RO} signal from the frequency processing domain {SI} signal to generate a frequency processing domain send-output {SO} signal; and encoding the frequency processing domain {SO} signal to an encoded audio domain {SO} signal and providing the encoded {SO} signal to the data interface of the processor.

In accordance with yet another aspect of the present disclosure there is provided a computer readable memory containing instructions which when executed by a processor perform the above method.

Other aspects of the present disclosure will be apparent to those of ordinary skill in the art from a review of the following detailed description in conjunction with the drawings. Embodiments of the present disclosure are not limited to any particular operating system, mobile device architecture, server architecture, or computer programming language.

### BRIEF DESCRIPTION OF THE DRAWINGS

Further features and advantages of the present disclosure will become apparent from the following detailed description, taken in combination with the appended drawings, in which:
Figure 1 shows a simple representation of end-to-end digital audio transmission system;
Figure 2 shows a simple representation of a terminal supporting hand-free operation;
Figure 3 shows a schematic representation of a terminal implementing typical frequency based acoustic echo-canceller and codec components;
Figure 4 shows a schematic representation of an echo-cancelling codec;
Figure 5 shows a schematic representation of an alternative echo-cancelling codec;
Figure 6 shows a schematic representation of a terminal incorporating the echo-cancelling codec;
Figure 7 shows a method of implementing the echo cancelling codec; and
Figure 8 shows a method of implementing the alternative echo cancelling codec.

It will be noted that throughout the appended drawings that like features are identified by like reference numerals.

### DETAILED DESCRIPTION

Embodiments are described below, by way of example only, with reference to the figures.

For the purposes of the description, the encoded signal received from a network and provided to an audio decoder is designated receive-input {RI} signal. The output to a speaker is designated receive-output {RO} signal. The signal received by a microphone is designated send-input {SI} signal and the output from an audio encoder to a network interface is designated send-output {SO} signal.

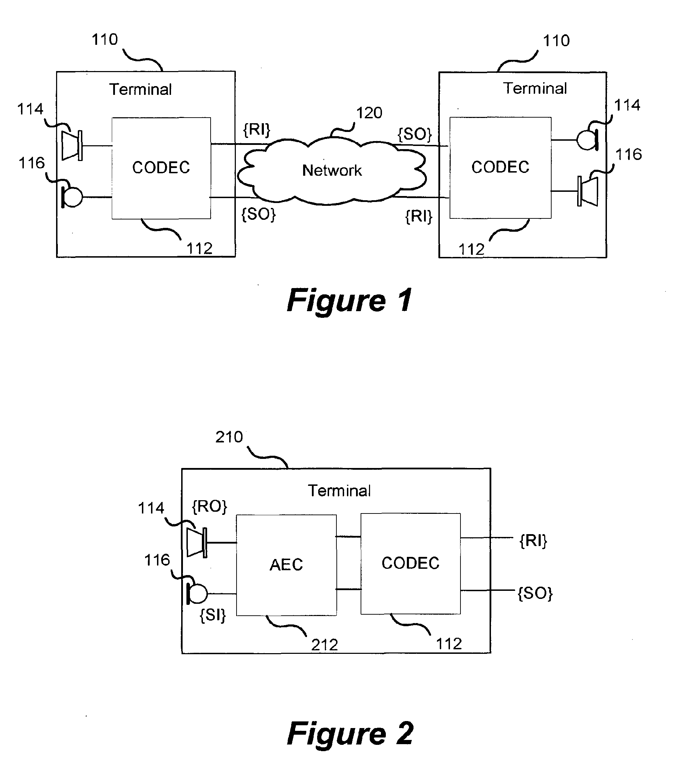

In a digital communications terminal, sound waves are converted to digital streams and then encoded for transmission over a communications network. As shown in Figure 1, in a simple representation of network based audio communications, terminals 110 connect to a communications network 120 where audio (e.g. an audio signal) at each end is received at terminal 110 end and reproduced at the other terminal 110. Each digital communications terminal 110 includes a speaker 114 for reproducing the audio and a microphone 116 for receiving the audio to convey through the communications network. For simplicity not all elements are shown in the simple representation of Figure 1, for example additional elements such as analog to digital (A/D) converters and digital to analog (D/A) converters are not shown but may be incorporated in the codec or separately. A terminal device 110 may be a mobile device, telephone device, speakerphone, conference phone, an integrated car device, a Bluetooth speakerphone that couples to a mobile device or any device that provides speaker phone functionality. Each terminal device 110 has a codec (coder/decoder) 112 that performs the coding and decoding by, respectively, compression of un-encoded time domain signals and decompression of encoded domain digital audio transported through the communications network 120. In a hands-free speakerphone function the positioning of the speaker 114 and microphone 116 can result in acoustic echo occurring as sound from the speaker 114 is received by the microphone 116. In the simple representation, any acoustic echo not attenuated by the terminal device will be reproduced at the opposite end.

To compensate for acoustic echo, an acoustic echo-canceller (AEC) 212 can be added upstream of the codec 112 as shown in terminal device 210 of Figure 2. The acoustic echo-canceller 212 and codec 112 are implemented as separate components and require a common interface signal domain to be compatible, for example an un-encoded amplitude signal represented in a time domain, however the operation of each of the components can occur in various domains that require additional processing to transform between domains. For example, some components work in the time domain, various frequency domains, or wavelet domains.

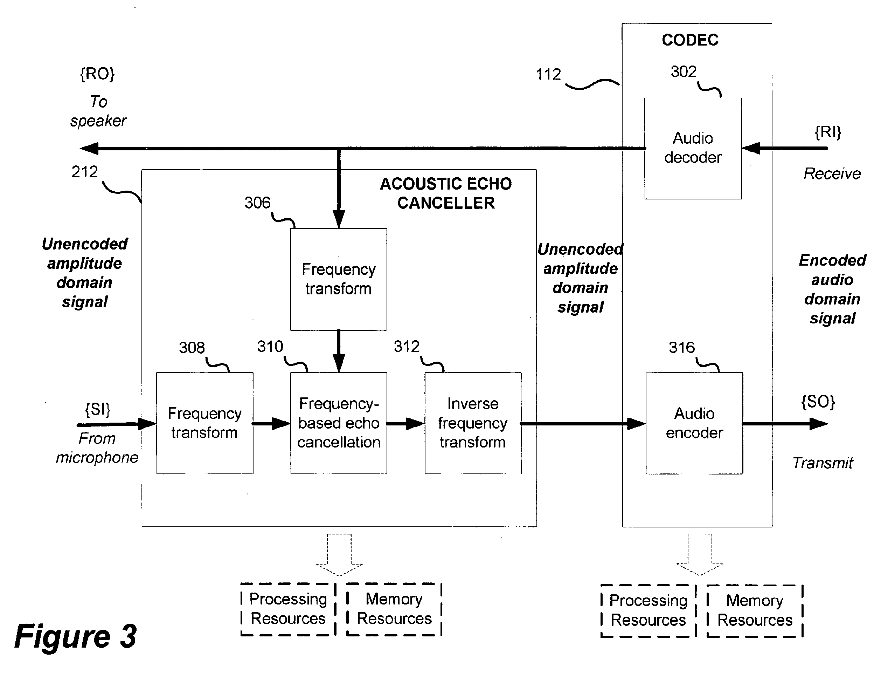

Figure 3 depicts some of the internal components of a frequency-based AEC 212 and a codec 112. In this example, the codec 112 receives an encoded {RI} signal at audio decoder 302. The audio decoder 302 decodes the {RI} signal to a time domain {RO} signal. The {RO} signal can be provided to a digital to analog (D/A) convertor, and then to an amplifier and/or signal processor, and then provided to a speaker 114 to reproduce the audio. The {RO} signal is also provided to a frequency transform 306 of AEC 212 (either directly as shown in Figure 3 or fed-back externally to allow for external processing of {RO} signal for example after an amplification stage and/or signal processing) to convert the output to the frequency domain. An analog amplitude {SI} signal from a microphone 116 is frequency transformed 308 to the frequency domain and frequency based echo-cancellation 310 is performed utilizing the transformed {SI} signal and the transformed {RO} signal to attenuate echo components contained in the received signal. An inverse frequency transform 312 is then performed to convert the signal back to the time domain and passed to the codec 112. The audio encoder 316 encodes the received time domain signal to an encoded domain {SO} signal that is then transmitted to the communications network. The audio decoder 302 and audio encoder 316 may internally transform their input signals into various processing domains (such as the frequency domain) as part of their encoding/decoding process. The division of the AEC 212 and codec 112 results in duplication of common signal processing between the two separate components, such as domain transforms and feature detectors like voice pitch detection and voice activity detection (VAD) and requires separate processing and memory resources for the AEC 212 and codec 112. The division of echo-cancelation and codec functions to separate processing entities does not allow sharing of common processing functions, signal analysis and memory buffers between components resulting in redundant processing and extra buffering which translates into higher component cost and increased signal delay.

In terms of AEC 212 and codec 112 functions, the redundant signal processing is computationally expensive consuming significant MIPS (millions instructions per second) of processing resources and requires memory to buffer signals between processing domains. Each component, the AEC 212 and the codec 112, also require separate signal buffering to maintain their independence, which requires additional memory and adds latency to the signal path. In addition the longer the signal path, the "harder" an echo canceller must work (e.g. the more computationally intensive) to provide more acceptable echo attenuation. Although a frequency domain transformation is described, the AEC 212 and codec 112 may operate in different domains with additional domain transformations being required to process the signals to a common amplitude domain or other processing domain. In addition, due to processing or memory limitations, each component may not be able to run algorithms to generate processing information extracted from signal characteristics or processing parameters that would improve efficiency of the overall processing function of the component. Some components may inherently be able to generate processing information that would be of benefit to other processing functions but not be able to provide this information in an efficient manner as they are only designed to share an audio wave signal in the amplitude domain. For example, pitch detection can greatly assist AEC algorithms but may not be utilized due to its computational load while most codecs include a pitch detector to perform the encoding. Given the separation, the AEC cannot access this valuable information.

The disclosed echo-cancelling codec can significantly reduce MIPS and memory requirements of an AEC-codec combination by sharing common processing, memory buffers and extracted signal characteristics. This device may be incorporated in a terminal device or in an accessory that couples to a terminal device to enable hands free or speakerphone capability. In addition, the combined echo-cancelling codec can provide better echo cancellation through more complex processing or can provide similar echo cancellation quality for significantly less MIPS/memory than existing solutions. The echo cancelling codec enables the AEC to communicate with an encoder and a decoder to send and receive signal characteristics and processing information to improve operating efficiency and minimize processing function duplication.

By providing static and real-time processing information between the encoder or decoder and AEC, the processing information can be shared to improve efficiency of the processing functions and related algorithms to improve or reduce resource allocation or reduce workload. For example, static information such as the type of decoding/encoding algorithm, coding rates, frame sizes can be provided from an encoder to optimize AEC operation and resources utilized such as memory. Real-time information such as voice pitch or activity detection can be provided between processing functions. Duplication of these processing functions results in additional cost in terms of extra MIPS, memory and possibly extra processing delays. For example without information sharing, the AEC and decoder/encoder may calculate various signal characteristics such as voice pitch and voice activity detection (VAD) resulting in duplication of resources or lower efficiency if these features are not provided. In another example, on the receive side, information such as signal class (vowel-based speech, fricatives, no-speech/noise) or signal unreliable (due to packet loss or some other reason) can be used to guide the AEC's processing allowing it to switch to various processing modes depending on the echo characteristics it is trying to process.

Similarly, signal processing (code or results) can be shared or eliminated within the AEC and encoder/decoder as well. For example, if the audio encoder uses a frequency domain version of the signal output from the frequency transform in its internal processing, the output of the echo cancellation can be used directly by the audio encoder without having to recalculate this costly transformation. In addition, if the audio encoder operates in the echo canceller's processing domain, then the inverse domain transform can be eliminated. Reducing the signalprocessing load allows the echo-cancelling codec to provide increased processing complexity with lower signal delay, which simplifies the required AEC processing.

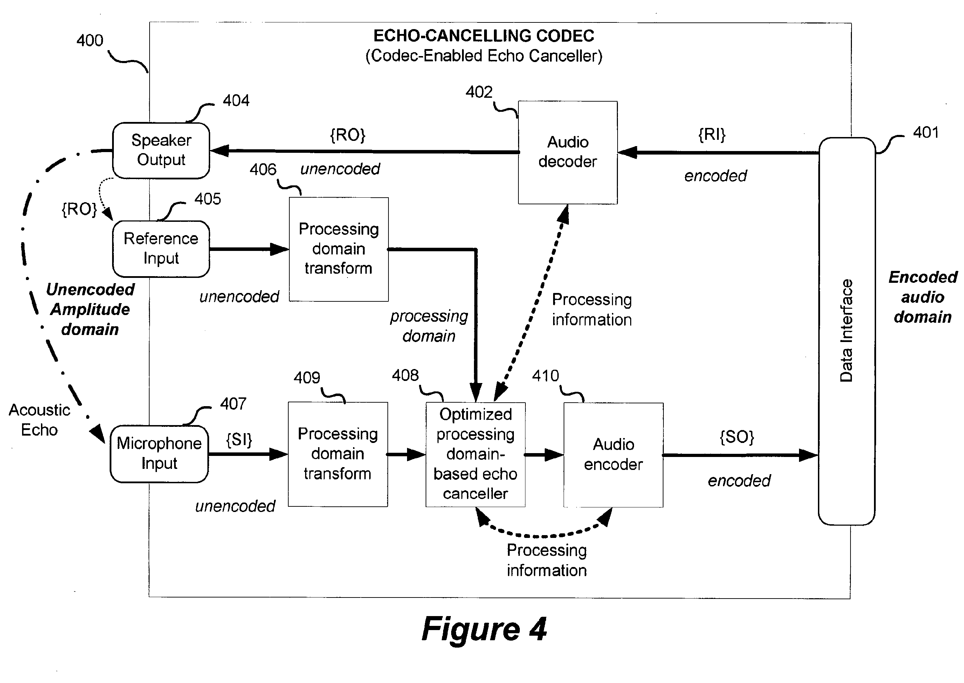

Figure 4 shows a schematic representation of an echo-cancelling codec 400. The echo-cancelling codec 400 incorporates echo cancelling and codec functions or processing blocks in a single processing unit that reduces signal buffering, therefore reduces signal latency, and simplifies the echo cancellation algorithm. The encoded {RI} signal is received by an audio decoder 402 from a data interface 401 and is converted to an audio waveform in the amplitude domain {RO} signal which can then be provided to a speaker output 404, or to an intermediary processing component or output stage prior to playback through a speaker coupled to the speaker output. Samples of the decoded {RO} signal after the output stage that provides amplification and audio processing, may be provided to a reference input 405 and in turn to a processing domain transform 406. The samples can then be provided in the processing domain as a reference signal to an optimized AEC 408. The reference input 405 enables any output distortions or signal processing changes introduced by the output stage to be accounted for in the {RO} signal provided to the AEC 408 to improve accuracy in determining echo components. The audio decoder 402 and AEC 408 can share processing information to improve operation and reduce duplication and resource requirements. The processing information can include parameters such as signal class, signal reliability, identification of the type of encoding or encoding specific parameters related to the decoder 402 operation and to the domain-based AEC 408. This information is utilized by the AEC 408 to improve echo processing, eliminate processing stages, and reduce memory usage. In addition to receiving desirable audio signals, the microphone input 407 receives acoustic echoes, from the audio generated by a speaker and acoustic interaction with the surrounding environment, which must be reduced or eliminated. A domain transform 409 is performed on amplitude {SI} signal from microphone input 407 and the transformed {SI} signal is provided to the AEC 408. The AEC 408 removes the transformed {RO} signal components from the transformed {SI} signal components to reduce any echo components and provides a resultant signal to the audio encoder 410. The audio encoder 410 encodes the output {SO} signal and provides the encoded signal to the data interface 401. In addition, the AEC 408 can provide processing information such as voice pitch and voice activity detection (VAD) information, along with the resultant signal, to the encoder 410 to improve the encoding process and conserve resources. The audio encoder 410 may also provide to the AEC 408 processing information regarding the type of encoding or coding specific parameters to improve the AEC 408 operation or share processing operations to eliminate duplication.

The processing information may be shared at start-up, or initialization, of the echo-cancelling codec 400 or of an audio session. In addition or alternatively, the processing information may be shared during run-time based upon aspects of the signal being processed by the respective components. At start-up, the configuration information can be encoding or decoding parameters such as sample rate or fame size. The parameters may not necessarily be the same for both the encoder and decoder, for example, the encoder may be encoding outgoing data at a lower rate than the decoded data. The AEC 408 or 508 can utilize processing information to optimize echo cancellation performance and resource utilization. The processing information may be defined by identifiers such as an algorithm identifier, or parameter set identifier, which would be associated with a predefined set of configuration parameters rather than requiring specific value. For example by identifying a particular standard G722.2 used by the decoder the AEC function can determine sampling rate and frame sizes. The run-time information can be generated based on characteristics of the signal or be data provided by transforms of the signal itself. The run-time information can include characteristics such as voice activity detection (VAD) data, signal reliability data, or pitch detection data that may be utilized during the encoding, decoding or AEC operation or by signal domain transformation data such as frequency transform data or wavelet transform data distinct from the processed data {RO} signal and {SI} signal.

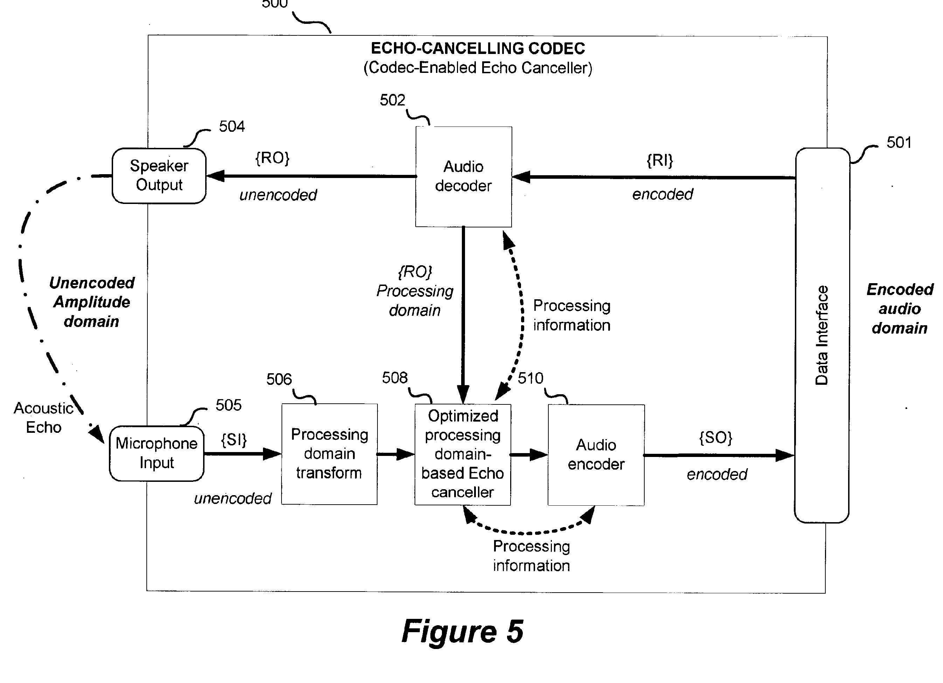

Figure 5 shows a schematic representation of an alternative echo-cancelling codec 500 where the audio decoder provides processing domain {RO} signals directly to the AEC 508. The echo-cancelling codec 500 incorporates the echo-cancelling and codec functions in a single unit that reduces signal buffering and therefore reduces signal latency and simplifies the echo cancellation algorithm. The encoded {RI} signal is received by an audio decoder 502 from a data interface 501 and converts the encoded signal to an audio waveform in the amplitude domain {RO} signal which is then be provided to a speaker output 504. A sample of the decoded {RO} signal is also provided from the audio decoder 502 to an optimized AEC 508. The audio decoder 502 provides processing information such as signal class or signal reliability of the decoded signal and coding specific parameters related to the codec utilized to the domain-based AEC 508. The processing information may be utilized by the AEC 508 to improve echo processing, eliminate processing stages, and reduce memory usage. In addition to receiving desirable audio signals, the microphone input 505 receives acoustic echoes from the audio generated by a speaker and acoustic interaction with the surrounding environment, which must be reduced or eliminated. A domain transform 506 on amplitude {SI} signal from the microphone input 505 is performed and the transformed {SI} signal is provided to the AEC 508. The AEC 508 can remove the transformed {RO} signal components from the transformed {SI} signal to reduce any echo components and provide a resultant signal to the audio encoder 510. The audio encoder 510 then encodes the output {SO} signal and provides the encoded {SO} signal to the communications network interface. The AEC 508 and encoder 510 can share information such as voice pitch and voice activity detection (VAD) information, along with the {RO} signal, to improve the encoding process and conserve resources.

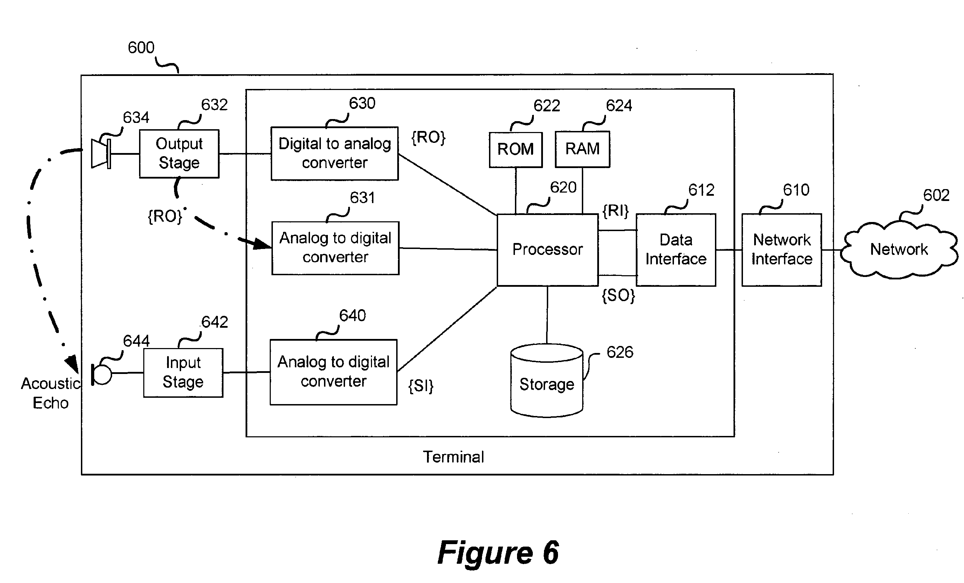

Figure 6 shows a schematic representation of an example terminal 600 for implementing an echo-cancelling codec. In this example the echo-cancelling codec is provided by a processor 620 which may be a digital signal processor (DSP), application specific integrated circuit (ASIC), general purpose processor, or provided by one or more processing cores in a multi-core processor. The processor may contain, or access, computer readable memory such as ROM 622, RAM 624 or storage device 626 to retrieve and process instructions for providing the echo-cancelling codec functions. Encoded data is sent and received through a data interface 612 coupled to a network interface 610. The network interface 610 may provide access to the communication network 602 through a wireline or wireless interface. For example the wireless interface may be coupled to a short range, such as Bluetooth, or long range wireless communication interface, such as CMDA, GSM, HSPDA, LTE etc., to either directly or indirectly access the network or via a Bluetooth interface to connect hands free device to a mobile device. The processor 620 may include or interface with a digital to analog converter 630 coupled to an amplifier 632 and speaker 634 to reproduce audio received from the network. Optionally an analog to digital converter 631 may also be provided to receive an output signal from an output stage 632 such as an amplifier prior to output by the speaker 634 if an external {RO} signal can be utilized by the AEC based upon the echo-cancelling codec processing configuration. Audio input received by microphone 644 may be amplified by an input stage 642 and converted by analog digital converter 640, which is provided to processor 620.

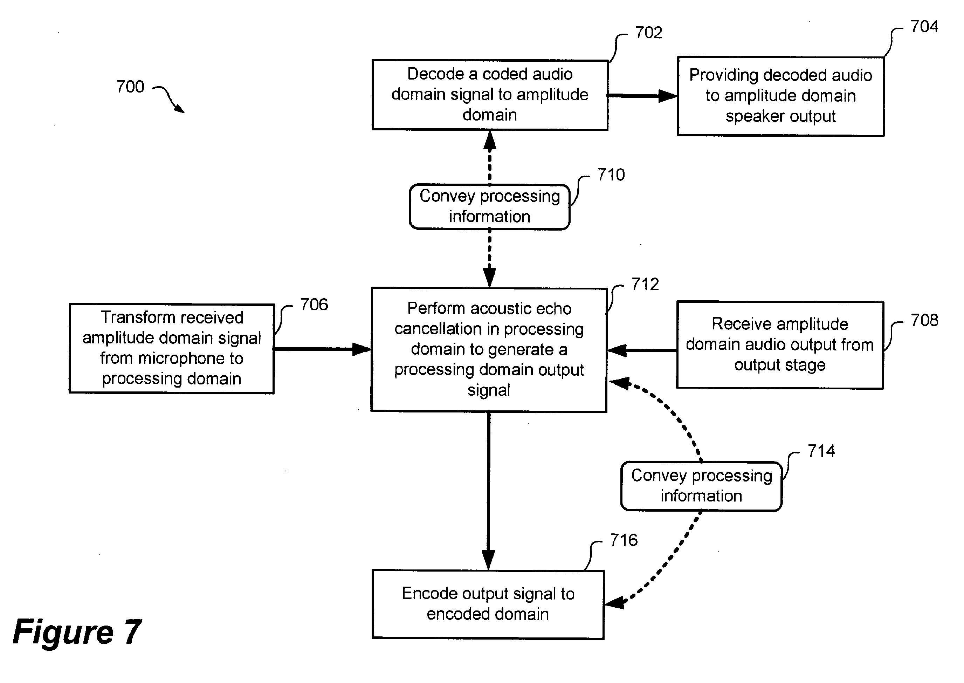

Figure 7 shows a method (700) of implementing an echo cancelling codec in a processor with reference to Figures 4 and 6. An encoded audio domain {RI} signal is received through a data interface 401, 612 and is decoded 402 to an amplitude {RO} signal (702), or alternatively a time domain signal, and provided to speaker output 404 (704) to be amplified and/or processed 632 before a speaker 634. An amplitude domain signal is received from the microphone input 407 (706) and transformed 409 to a processing domain {SI} signal. The microphone input signal comprises a desired audio component and an acoustic echo based on the {RO} signal and any interaction with the playback environment. Samples of the {RO} signal at the output stage 632 are also fed back to a reference input 405 (708) to capture a representative output signal that has been processed by the output stage 632 before the speaker 634. The reference input {RO} signal is transformed to the processing domain 406 and provided to the AEC 408. Echo cancellation 408 is performed by removing processing domain {RO} signal from the processing domain {SI} signal to generate a processing domain {SO} signal (712). During decoding, processing information can be exchanged between to the decoder 402 and the AEC 408 to guide the echo cancellation operation and improve performance (710). Information such as class or signal reliability of the decoded {RI} signal and coding specific parameters can be provided from the decoder 402. The processing domain {SO} signal is encoded by encoder 410 to an encoded audio domain {SO} signal (716) and provided to the data interface 401, 612. Processing information may be exchanged between the AEC 408 and the encoder 410 (714) to improve encoding performance and share/conserve resources by providing information such as voice pitch and voice activity detection (VAD) information.

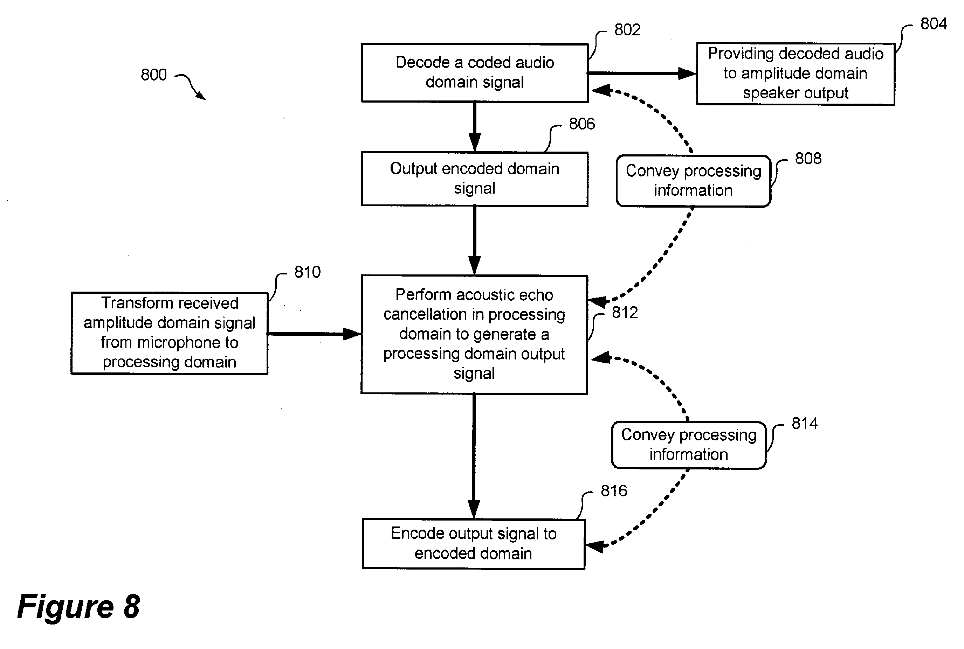

Figure 8 shows a method (800) of implementing an echo cancelling codec in a processor for use in a terminal device with reference to Figures 5 and 6. An encoded audio domain receive-input {RI} signal is received through a data interface 401, 602 is decoded 502 to an amplitude {RO} signal (802), or time domain signal (804) to be amplified and/or processed 632 before a speaker 634. A processing domain {RO} signal (or alternatively labelled a decoded processing domain {RI} signal) is provided directly from the decoder 502 to the AEC 508 (806). A microphone input {SI} signal is transformed 506 from an amplitude {SI} signal to the processing domain {SI} signal (810). Echo cancellation is performed by AEC 508 by removing processing domain {RO} signal from the processing domain {SI} signal to generate a processing domain {SO} signal (812). The decoder 502 and AEC 508 share processing information (812) to guide the echo canceller operation and improve performance. The processing domain {SO} signal is encoded by encoder 510 to an encoded audio domain {SO} signal (810) and provided to the data interface 501, 612. Processing information is provided from the AEC 508 to the encoder 510 (814) to improve encoding performance.

In reference to both Figures 7 and 8, the processing information can be shared at start-up, or initialization, of the device or an audio session or shared during run-time based upon aspects of the signal being processed by the respective component. At start-up, the configuration information can be encoding or decoding parameters such as sample rate or fame size. Identifiers may also define the parameters such as an algorithm identifier, which would be, associated with a predefined set of configuration parameters. Processing information can also be exchanged during run-time or within a communication session. The run-time information can be characteristics such as voice activity detection (VAD) data, signal reliability data, or pitch detection data that may be utilized during the encoding, decoding or AEC operation or by signal domain transformation data such as frequency transform data or wavelet transform data distinct from the processed signal data {RO} and {SI}.

Although certain system, methods, and apparatus are described herein, the scope of coverage of this disclosure is not limited thereto. To the contrary, this disclosure covers all methods, apparatus, computer readable memory, and articles of manufacture fairly falling within the scope of the appended claims either literally or under the doctrine of equivalents.

## Claims

1. An echo-cancelling codec (400, 500) comprising:
an audio decoder (402, 502) coupled to a data interface (401, 501) for
decoding an encoded audio domain receive-inputo ({RI}) signal to an amplitude domain receive-output ({RO}) signal provided to a speaker output (404, 504);
an acoustic echo-canceller (408, 508) for:
receiving a frequency processing domain ({RO}) signal transformed from
the amplitude domain ({RO}) signal;
receiving a frequency processing domain send-input ({SI}) signal
transformed from a microphone input (407,505) amplitude domain send-input ({SI}) signal coupled to the echo-cancelling codec;
removing the frequency processing domain ({RO}) signal from the
frequency processing domain ({SI}) signal to generate a frequency processing domain send-output ({SO}) signal; and
an audio encoder (410, 510) coupled to the acoustic echo-canceller for encoding the frequency processing domain ({SO}) signal from the acoustic echo-canceller (408, 508) to an encoded audio domain ({SO}) signal and providing the encoded audio domain ({SO}) signal to the data interface (401, 501).

2. The echo-cancelling codec of claim 1 wherein the audio decoder and the acoustic echo-canceller share processing information and/or the acoustic echo-canceller and the audio encoder share processing information.

3. The echo-cancelling codec of claim 2 wherein the processing information comprises start-up configuration information determined from decoding or encoding parameters from the audio decoder and encoder respectively.

4. The echo cancelling codec of claim 3 wherein the decoding or encoding parameters are one or more of a sample rate, a frame size, a decoding or an encoding algorithm identifier.

5. The echo-cancelling codec of claim 2 wherein the processing information comprises run-time information exchanged during operation of the decoder or encoder, the run-time information generated from the processing of the ({RI}) signal or ({SO}) signal respectively.

6. The echo-cancelling codec of claim 5 wherein the run-time information is one or more of voice activity detection (VAD) data, signal reliability data, or pitch detection data, frequency processing domain signal transformation data comprising frequency transform data and wavelet transform data.

7. The echo-cancelling codec of any one of claims 1 to 6 further comprising a processing transform for transforming a microphone amplitude domain ({SI}) signal from the microphone input to the frequency processing domain ({SI}) signal prior to processing by the acoustic echo-canceller.

8. The echo-cancelling codec of any one of claims 1 to 7 further comprising a
reference input for receiving an amplitude domain ({RO}) signal from an amplification stage coupled to the speaker output, the reference input coupled to the acoustic echo-canceller by a processing transform to provide the processing domain ({RO}) signal.

9. The echo-cancelling codec of claim 8 wherein the reference input is coupled to an analog to digital converter to convert an analog amplitude signal from an amplification stage to a digital amplitude ({RO}) signal.

10. A method of audio signal processing performed by a processor (620), the method comprising:
decoding (702, 802) an encoded audio domain receive-input ({RI}) signal
received at a data interface of the processor to an amplitude domain receive-output ({RO}) signal and transforming to a frequency processing domain ({RO}) signal;
providing (704, 804) an amplitude domain receive-output ({RO}) signal to a
speaker output coupled to the processor from the decoded audio domain ({RI}) signal;
receiving (710, 810) an amplitude domain send-input ({SI}) signal from a
microphone input coupled to the processor and transforming the amplitude domain ({SI}) signal to a frequency processing domain ({SI}) signal;
performing acoustic echo cancellation (712, 812) by removing the frequency
processing domain ({RO}) signal from the frequency processing domain ({SI}) signal to generate a frequency processing domain send-output ({SO}) signal; and
encoding (716, 816) the frequency processing domain ({SO}) signal to an
encoded audio domain ({SO}) signal and providing the encoded ({SO}) signal to the data interface of the processor.

11. The method of claim 10 further comprising:
conveying processing information determined during decoding of the
encoded audio domain ({RI}) signal for performing acoustic echo cancellation; and
conveying processing information determined during performing acoustic
echo cancellation during encoding of the frequency processing domain ({SO}) signal.

12. The method of claim 11 wherein the processing information comprises parameters defined by one or more of a sample rate, a frame size, an encoding and decoding algorithm identifier.

13. The method of claims 11 or 12 wherein the processing information comprises run-time information generated from the processing of the ({RI}) signal or ({SO}) signal exchanged during encoding or decoding respectively.

14. The method of any one of claims 11 to 13 wherein the run-time information is one or more of voice activity detection (VAD) data, signal reliability data, or pitch detection data, frequency processing domain signal transformation data comprising frequency transform data and wavelet transform data.

15. A computer readable memory containing instructions which when executed by a processor perform the steps of claims 11 to 14.

## Patentansprüche

1. Echounterdrückungs-Codec (400, 500), der aufweist:
einen Audio-Decodierer (402, 502), der mit einer Datenschnittstelle (401, 501) gekoppelt ist zum Decodieren eines codierten Audiodomäne-Empfangseingangs({RI - receive-input})-Signals in ein Amplitudendomäne-Empfangsausgangs({RO - receive-outputl})-Signal, das an einen Lautsprecherausgang (404, 504) geliefert wird;
einen akustischen Echounterdrücker (408, 508) zum:
Empfangen eines Frequenzverarbeitungsdomäne({RO})-Signals, das von dem Amplitudendomäne({RO})-Signal umgewandelt wird;
Empfangen eines Frequenzverarbeitungsdomäne-Sendeeingangs({SI - send-input})-Signals, das von einem Mikrofon-Eingang(407, 505)-Amplitudendomäne-Sendeeingangs({SI})-Signal umgewandelt wird, das mit dem Echounterdrückungs-Codec gekoppelt ist;
Entfernen des Frequenzverarbeitungsdomäne({RO})-Signals aus dem Frequenzverarbeitungsdomäne({SI})-Signal, um ein Frequenzverarbeitungsdomäne-Sendeausgangs({SO-send-outputl})-Signal zu erzeugen; und
einen Audio-Codierer (410, 510), der mit dem akustischen Echounterdrücker gekoppelt ist, zum Codieren des Frequenzverarbeitungsdomäne({SO})-Signals von dem akustischen Echounterdrücker (408, 508) in ein codiertes Audiodomäne({SO})-Signal und Liefern des codierten Audiodomäne({SO})-Signals an die Datenschnittstelle (401, 501).

2. Der Echounterdrückungs-Codec gemäß Anspruch 1, wobei der Audio-Decodierer und der akustische Echounterdrücker Verarbeitungsinformation teilen und/oder der akustische Echounterdrücker und der Audio-Codierer Verarbeitungsinformation teilen.

3. Der Echounterdrückungs-Codec gemäß Anspruch 2, wobei die Verarbeitungsinformation eine Startkonfigurationsinformation aufweist, die aus einem Decodieren oder Codieren von Parametern aus dem Audio-Decodierer beziehungsweise -Codierer bestimmt wird.

4. Der Echounterdrückungs-Codec gemäß Anspruch 3, wobei die Decodier- oder Codier-Parameter eines oder mehrere sind aus einer Abtastrate, einer Rahmengröße, einem Decodier- oder einem Codier-Algorithmus-Identifizierer.

5. Der Echounterdrückungs-Codec gemäß Anspruch 2, wobei die Verarbeitungsinformation eine Laufzeitinformation aufweist, die während eines Betriebs des Decodierers oder des Codierers ausgetauscht wird, wobei die Laufzeitinformation aus der Verarbeitung des ({RI})-Signals beziehungsweise des ({SO})-Signals erzeugt wird.

6. Der Echounterdrückungs-Codec gemäß Anspruch 5, wobei die Laufzeitinformation eines oder mehrere ist aus Sprachaktivitätserfassungs(VAD - voice activity detection)-Daten, Signalzuverlässigkeitsdaten oder Pitch- bzw. Tonhöhe-Erfassungsdaten, Frequenzverarbeitungsdomäne-Signal-Transformationsdaten, die Frequenz-Transformationsdaten und Wavelet-Transformationsdaten aufweisen.

7. Der Echounterdrückungs-Codec gemäß einem der Ansprüche 1 bis 6, der weiter eine Verarbeitungstransformation aufweist zum Umwandeln eines Mikrofon-Amplitudendomäne({SI})-Signals von dem Mikrofon-Eingang in das Frequenzverarbeitungsdomäne({SI})-Signal vor einer Verarbeitung durch den akustischen Echounterdrücker.

8. Der Echounterdrückungs-Codec gemäß einem der Ansprüche 1 bis 7, der weiter aufweist einen Referenzeingang zum Empfangen eines Amplitudendomäne({RO})-Signals von einer Verstärkungsstufe, die mit dem Lautsprecherausgang gekoppelt ist, wobei der Referenzeingang mit dem akustischen Echounterdrücker durch eine Verarbeitungstransformation gekoppelt ist, um das Verarbeitungsdomäne({RO})-Signal zu liefern.

9. Der Echounterdrückungs-Codec gemäß Anspruch 8, wobei der Referenzeingang mit einem Analog-Digital-Wandler gekoppelt ist, um ein analoges Amplitudensignal von einer Verstärkungsstufe in ein digitales Amplitude({RO})-Signal umzuwandeln.

10. Verfahren zur Audiosignalverarbeitung, das durch einen Prozessor (620) durchgeführt wird, wobei das Verfahren aufweist:
Decodieren (702, 802) eines codierten Audiodomäne-Empfangseingangs({RI - receive-input})-Signals, das an einer Datenschnittstelle des Prozessors empfangen wird, in ein Amplitudendomäne-Empfangsausgangs({RO - receive-output})-Signal und
Umwandeln in ein Frequenzverarbeitungsdomäne({RO})-Signal;
Liefern (704, 804) eines Amplitudendomäne-Empfangsausgangs({RO})-Signals an einen Lautsprecherausgang, der mit dem Prozessor gekoppelt ist, von dem decodierten Audiodomäne({RI})-Signal;
Empfangen (710, 810) eines Amplitudendomäne-Sendeeingangs({SI})-Signals von einem Mikrofon-Eingang, der mit dem Prozessor gekoppelt ist,
und Umwandeln des Amplitudendomäne({SI})-Signals in ein Frequenzverarbeitungsdomäne({SI})-Signal;
Durchführen einer akustischen Echounterdrückung (712, 812) durch Entfernen des Frequenzverarbeitungsdomäne({RO})-Signals aus dem Frequenzverarbeitungsdomäne({SI})-Signal, um ein Frequenzverarbeitungsdomäne-Sendeausgangs({SO})-Signal zu erzeugen;
und
Codieren (716, 816) des Frequenzverarbeitungsdomäne({SO})-Signals in ein codiertes Audiodomäne({SO})-Signal und Liefern des codierten ({SO})-Signals an die Datenschnittstelle des Prozessors.

11. Das Verfahren gemäß Anspruch 10, das weiter aufweist:
Übermitteln von Verarbeitungsinformation, die während eines Decodierens des codierten Audiodomäne({RI})-Signals bestimmt wird, zum Durchführen einer akustischen Echounterdrückung; und
Übermitteln von Verarbeitungsinformation, die bestimmt wird während eines Durchführens einer akustischen Echounterdrückung während eines Codierens des Frequenzverarbeitungsdomäne({SO})-Signals.

12. Das Verfahren gemäß Anspruch 11, wobei die Verarbeitungsinformation Parameter aufweist, die durch eines oder mehrere definiert werden aus einer Abtastrate, einer Rahmengröße, einem Decodier- oder einem Codier-Algorithmus-Identifizierer.

13. Das Verfahren gemäß Anspruch 11 oder 12, wobei die Verarbeitungsinformation eine Laufzeitinformation aufweist, die aus der Verarbeitung des ({RI})-Signals oder des ({SO})-Signals erzeugt wird, ausgetauscht während einer Codierung beziehungsweise Decodierung.

14. Das Verfahren gemäß einem der Ansprüche 11 bis 13, wobei die Laufzeitinformation eines oder mehrere ist aus Sprachaktivitätserfassungs(VAD - voice activity detection)-Daten, Signalzuverlässigkeitsdaten oder Pitch- bzw. Tonhöhe-Erfassungsdaten, Frequenzverarbeitungsdomäne-Signal-Transformationsdaten, die Frequenz-Transformationsdaten und Wavelet-Transformationsdaten aufweisen.

15. Computerlesbarer Speicher, der Anweisungen enthält, die bei einer Ausführung durch einen Prozessor die Schritte gemäß den Ansprüchen 11 bis 14 ausführen.

## Revendications

1. Codec à annulation d'écho (400, 500) comprenant :
un décodeur audio (402, 502) relié à une interface de données (401, 501) destinée à décoder un signal d'entrée de réception de domaine audio codé ({RI}) en un signal de sortie de réception du domaine d'amplitude ({RO}) fourni à un hautparleur de sorite (404, 504) ;
un annuleur d'écho acoustique (408, 508) destiné à :
recevoir un signal du domaine de traitement de fréquence ({RO}) transformé à partir du signal du domaine d'amplitude ({RO}) ;
recevoir un signal d'entrée d'émission de domaine de traitement de fréquence ({SI}) transformé à partir d'un signal d'entrée d'émission du domaine d'amplitude ({SI}) d'une entrée de microphone (407, 505) relié au codec à annulation d'écho ;
éliminer le signal du domaine de traitement de fréquence ({RO}) du signal du domaine de traitement de fréquence ({SI}) afin de générer un signal de sortie d'émission du domaine de traitement de fréquence ({SO}) ; et
un codeur audio (410, 510) relié à l'annuleur d'écho acoustique pour coder le signal du domaine de traitement de fréquence ({SO}) provenant de l'annuleur d'écho acoustique (408, 508) en un signal du domaine audio codé ({SO}) et fournir le signal du domaine audio codé ({SO}) à l'interface de données (401, 501).

2. Codec à annulation d'écho selon la revendication 1, dans lequel le décodeur audio et l'annuleur d'écho acoustique partagent des informations de traitement et/ou l'annuleur d'écho acoustique et le codeur audio partagent des informations de traitement.

3. Codec à annulation d'écho selon la revendication 2, dans lequel les informations de traitement comprennent des informations de configuration de démarrage déterminées à partir de paramètres de décodage ou de codage provenant respectivement du décodeur et du codeur audio.

4. Codec à annulation d'écho selon la revendication 3, dans lequel les paramètres de décodage ou de codage sont un ou plusieurs d'une fréquence d'échantillonnage, d'une taille de trame, et d'un identifiant d'algorithme de décodage ou de codage.

5. Codec à annulation d'écho selon la revendication 2, dans lequel les informations de traitement comprennent des informations du moment de l'exécution échangées pendant le fonctionnement du décodeur ou du codeur, les informations du moment de l'exécution étant respectivement générées par le traitement du signal ({RI}) ou ({SO}).

6. Codec à annulation d'écho selon la revendication 5, dans lequel les informations du moment de l'exécution sont une ou plusieurs de données de détection d'activité vocale (VAD, Voice Activity Detection), de données de fiabilité du signal ou de données de détection de hauteur de son, de données de transformation de signal du domaine de traitement de fréquence comprenant des données de transformée en fréquence et des données de transformée en ondelettes.

7. Codec à annulation d'écho selon l'une quelconque des revendications 1 à 6, comprenant en outre une transformée de traitement destinée à transformer un signal du domaine d'amplitude de microphone ({SI}) provenant de l'entrée de microphone en le signal du domaine de traitement de fréquence ({SI}) avant le traitement effectué par l'annuleur d'écho acoustique.

8. Codec à annulation d'écho selon l'une quelconque des revendications 1 à 7, comprenant en outre une entrée de référence destinée à recevoir un signal du domaine d'amplitude ({RO}) provenant d'un étage d'amplification relié au hautparleur de sortie, l'entrée de référence étant reliée à l'annuleur d'écho acoustique par une transformée de traitement destinée à fournir le signal du domaine de traitement ({RO}).

9. Codec à annulation d'écho selon la revendication 8, dans lequel l'entrée de référence est reliée à un convertisseur analogique à numérique destiné à convertir un signal d'amplitude analogique provenant d'un étage d'amplification en un signal d'amplitude numérique ({RO}).

10. Procédé de traitement de signaux audio exécuté par un processeur (602), le procédé consistant à :
décoder (702, 802) un signal d'entrée de réception du domaine audio codé ({RI}) reçu sur une interface de données du processeur en un signal de sortie de réception du domaine d'amplitude ({RO}) et le transformer en un signal du domaine de traitement de fréquence ({RO}) ;
fournir (704, 804) un signal de sortie de réception du domaine d'amplitude ({RO}) à un hautparleur de sortie relié au processeur à partir du signal du domaine audio décodé ({RI}) ;
recevoir (710, 810) un signal d'entrée d'émission du domaine d'amplitude ({SI}) d'un microphone d'entrée relié au processeur et transformer le signal du domaine d'amplitude ({SI}) en un signal du domaine de traitement de fréquence ({SI}) ;
exécuter une annulation d'écho acoustique (712, 812) en éliminant le signal du domaine de traitement de fréquence ({RO}) du signal du domaine de traitement de fréquence ({SI}) afin de générer un signal de sortie d'émission du domaine de traitement de fréquence ({SO}) ;
et
coder (716, 816) le signal du domaine de traitement de fréquence ({SO}) en un signal du domaine audio codé ({SO}) et fournir le signal codé ({SO}) à l'interface de données du processeur.

11. Procédé selon la revendication 10, consistant en outre à :
acheminer des informations de traitement déterminées pendant le décodage du signal du domaine audio codé ({RI}) pour exécuter l'annulation d'écho acoustique ; et
acheminer des informations de traitement déterminées pendant l'exécution de l'annulation d'écho acoustique pendant le codage du signal du domaine de traitement de fréquence ({SO}).

12. Procédé selon la revendication 11, dans lequel les informations de traitement comprennent des paramètres définis par un ou plusieurs d'une fréquence d'échantillonnage, d'une taille de trame, et d'un identifiant d'algorithme de codage et de décodage.

13. Procédé selon la revendication 11 ou 12, dans lequel les informations de traitement comprennent des informations du moment de l'exécution générées par le traitement du signal ({RI}) ou du signal ({SO}) respectivement échangées pendant le codage ou le décodage.

14. Procédé selon l'une quelconque des revendications 11 à 13, dans lequel les informations du moment de l'exécution sont l'une ou plusieurs de données de détection d'activité vocale (VAD, Voice Activity Detection), de données de fiabilité du signal ou de données de détection de hauteur de son, de données de transformation de signal du domaine de traitement de fréquence comprenant des données de transformée en fréquence et des données de transformée en ondelettes.

15. Mémoire lisible par ordinateur contenant des instructions qui, lorsqu'elles sont exécutées par un processeur, mettent en oeuvre les étapes des revendications 11 à 14.
